# EUROPEAN PATENT APPLICATION

(11) **EP 1 445 015 A1**
(43) Date of publication of application: **11.08.2004**
(21) Application number: 04100373.2
(22) Date of filing: 03.02.2004
(51) Int. Cl.: B01J 19/00, G01N 27/60

(54) **Fast characterizing method for triboelectrical properties**

(30) Priority: 05.02.2003 EP 03100232
(71) Applicant: AGFA-GEVAERT, 2640 Mortsel (BE)
(72) Inventor: Desie, Guido, c/o Agfa Gaevert, 2640, Mortsel (BE); Muys, Bavo, c/o Agfa Gaevert, 2640, Mortsel (BE); Dierckx, Jan, c/o Agfa Gaevert, 2640, Mortsel (BE); Neirinck, Filip, c/o Agfa Gaevert, 2640, Mortsel (BE); Huygelen, Dirk, c/o Agfa Gaevert, 2540, Mortsel (BE)

(57) **Abstract**

An apparatus is disclosed for evaluating the triboelectrical properties of at least two samples, comprising a grounded means (1) for holding a material in sheet form comprising a support provided on at least one surface thereof with at least two samples each in at least one predefined region thereof; a charging means (4) for tribocharging the at least two samples; and a means (7) for measuring an electrical property of the at least two samples. A method for evaluating an array of multiple samples on their triboelectrical properties with such an apparatus is also disclosed.

## Description

### Technical Field

The present invention relates to a method for optimising the triboelectrical properties of materials.

### Background Art

Triboelectrical properties of film materials can have an enormous impact upon the ease and cost of manufacturing and packaging them.

In the case of a typical silver halide film material for medical or graphical applications, the film material is delivered to the customers in boxes, containing e.g. 100 individual sheets of a fixed format. In their specific application, these film materials come in contact with other surfaces. For example, a silver halide film for radiography can come into contact with the phosphor plate during the exposure step. If the triboelectrical properties of the silver halide film material are not well controlled, unwanted charging occurs which can lead to spark discharges causing undesirable image background on the processed silver halide film material. As a consequence, this could even lead to a doctor drawing incorrect conclusions from x-ray images. Another problem that can occur during packaging is that charging can cause a mutual repulsion of sheets of silver halide film, leading to too few sheets being packed in the boxes.

Many other applications require well-controlled triboelectrical properties, e.g.: jamming of transparent overhead projection foils in an electrophotographic copier, individual handling of multiple printing plates sticking together, transport problems in a printer of thermal transfer imaging materials, stapling of glass plates on a single stack, surface treatment of single-use extruded plastic clean room environment textiles, safety precautions preventing dust explosions,...

From the above examples it is clear that there is a need for a fast characterising method for triboelectrical properties.

**US 3713021** (KODAK) discloses an apparatus for checking the sensitometric qualities of a plurality of samples of photoconductive samples arranged in the form of a continuous belt, comprising:
(a) means for conveying said continuous belt of samples past a plurality of stations about the periphery of said belt,
(b) means at a first of said stations in the direction of belt travel for erasing charge from the samples in said belt,
(c) means, at a second station following said first station in the direction of belt travel, for applying charge to the samples in said belt,
(d) means, at a third station following said second station in the direction of the belt travel, for exposing said samples to an optical test image,
(e) means, at a fourth station following said third station in the direction of belt travel, for measuring and recording the charge on respective ones of said samples,
(f) control means for periodically enabling said means for applying random exposures to said samples, and for disabling said means for measuring and recording charges on said samples while said random exposure means is disabled.

**US 4328280** (3M) discloses a method of suppressing spark discharge from a surface which is capable of becoming negatively triboelectrically charged which comprises applying to said surface an isopropylbenzene compound having a substituent in the 2- or 4-position relative to the isopropyl group which has a Hammett σ constant of from -0.17 to +0.82 or a substituent in p the 3-position relative to the isopropyl group which has a σ constant of m from 0.0 to +0.88.

**EP 1243409 A** (AGFA) discloses a method for developing layered materials, comprising the steps of :
- applying, on a first region, R_{M}, of a substrate, a first layered material, MR_{M}, and on a second region, R_{N}, of said substrate a second layered material, MR , said material, MR_{M}, being different from said material, MR_{N}, and
- screening said materials, MR_{M} and MR_{N}, for a useful property, characterised in that said layers are applied by coating from a coating solution.

US 6166550 (XEROX) discloses a testing apparatus comprising:
a frame, a member rotatably secured to said frame;
a charging device for applying the charge to the member, said charging device including a charging device portion thereof positioned proximate to an external periphery of the member;
a mechanism for rotating the member, said mechanism operably associated with said frame; and
a charge measuring device operably associated with a support for measuring an electrical field emanating from the member, said charge measuring device including a measuring device portion thereof adapted to be positioned proximate to at least one measured position, on said external periphery of the member, said mechanism co-operating with said member to rotate the member, the charge measuring device adapted to measure the charge as a function of time at the at least one measured position;
wherein the testing apparatus measures at least one electrical property including permittivity associated with the member.

The triboelectrical properties of materials are important in respect of avoiding the charging of the material concerned or in respect of exploiting the triboelectric chargeability of a material. Such properties are dependent upon quite minor changes in surface composition and hence a combinatorial approach could be useful in the development of such materials. It is notable that combinatorial methods, although having a long history in other fields, have, to our knowledge, not yet been applied to a minimalization or a maximalization of triboelectric properties depending upon the foreseen application of the material. Evaluation of triboelectric properties in electro-optical testers has been carried out, but such measurements have been carried out on a very limited number of samples rendering the comparison of one set of samples with another problematical in view of environmental factors. A further problem that has not been properly addressed is possible lack of uniform charging over an array of samples.

### Objects of the invention

It is an object of the present invention to provide an apparatus for triboelectric charging an array of materials and characterising their triboelectrical properties in a fast and reproducible manner.

It is another object of the present invention to provide an apparatus for triboelectric charging a combinatorially designed array of materials and characterising their triboelectrical properties.

It is a further object of the present invention to provide a method for triboelectric charging an array of materials and characterising their triboelectrical properties in a fast and reproducible manner.

It is still a further object of the present invention to provide a method for triboelectric charging a combinatorially designed array of materials and characterising their triboelectrical properties.

These and other objects of the invention will become apparent from the description hereinafter.

### Summary of the invention

It has been surprisingly found that even with the possibility of crosscontamination due to there being no restoration of the charging means to its original state between charging events, that statistically useful and reproducible data can be obtained using combinatorial techniques for evaluating the triboelectrical properties of an array of samples using the apparatus and method of the present invention.

Objects of the present invention are realised by an apparatus for evaluating the triboelectrical properties of at least two samples, comprising:
- a grounded means (1) for holding a material in sheet form comprising a support provided on at least one surface thereof with at least two samples each in at least one predefined region thereof;
- a charging means (4) for tribocharging said at least two samples; and
- a means (7) for measuring an electrical property of said at least two samples.

Objects of the present invention are also realised by a method for evaluating the triboelectrical properties of an array of samples, said method comprising the following steps:
(a) providing on a support in sheet form an array of samples each in a predefined region;
(b) tribocharging said array of samples; and
(c) measuring sequentially an electrical property of a sample in said array of tribocharged samples.

### Brief Description of Drawings

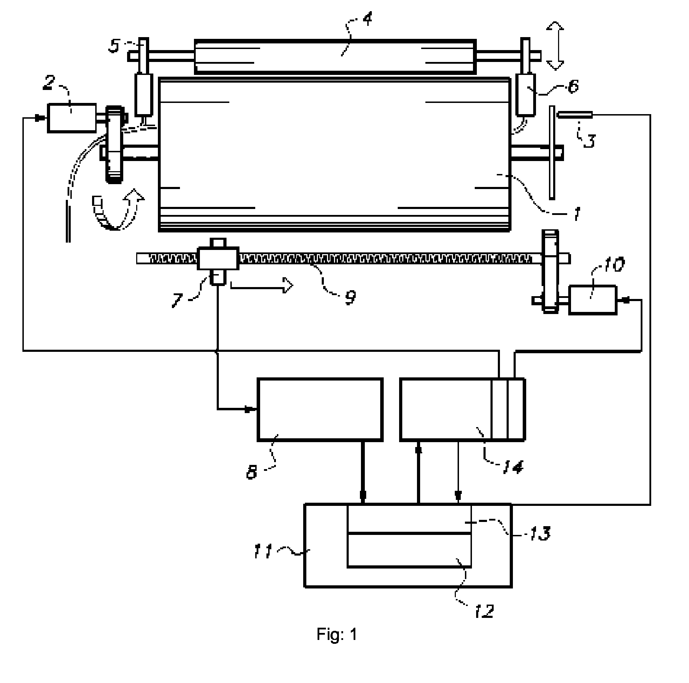

Fig. 1 shows a schematic representation of a preferred embodiment of an apparatus used in accordance with the present invention.

### Detailed Description

### Definitions

The term "tribocharging" as used in the present invention, means the charging of surfaces upon bringing two materials into frictional contact and then separating them. A transfer of electrons occurs between the contacting surfaces resulting in one surface acquiring a positive charge and the other surface acquiring a negative charge. If either of the materials is an insulator the resulting charge will be localised in the immediate region of the surface involved in the contact. The sign of the charge can be detected with an electrostatic voltmeter.

The term "triboelectric series" as used in the present invention, means a list of materials arranged in descending order from positive to negative tribocharge such that any one material is charged negatively with respect to any other material above it in the series.

The term "triboelectric chargeability" of a material, as used in the present invention, refers to the amount of charge transferred per contact. The higher the amount of charge transferred, the higher the triboelectric chargeability.

The term "triboelectric charging factor" of a material as used in disclosing the present invention, refers to the ease of triboelectric charging of two reference materials from the triboelectric series. It is calculated by subtraction of the surface potential of the material tribocharged with the first reference material from the surface potential of the material tribocharged with the second reference material. A large value for the triboelectric charging factor of a material means that the material can be easily charged by the two reference materials selected.

The term "sample" as used in the present invention, includes both test samples and reference samples.

The term "test sample" as used in the present invention, means a sample for which the triboelectric behaviour and properties are to be determined.

The term "internal reference sample" as used in the present invention, means a sample for which the triboelectric behaviour and properties are known and which is provided on a surface of the support with at least one test sample.

The term "simultaneously" as used in disclosing the present invention, means that an operation is performed at a certain point in time on all the samples provided on at least one surface of a support in sheet form.

The term "parallel" as used in the present invention, means that an operation is performed simultaneously at a certain point in time on at least two of the samples provided on at least one surface of a support in sheet form, followed by the same operation repeated at least once at a later point in time on another part of the samples provided on the at least one surface of a support in sheet form.

The term "sequentially" as used in the present invention, means that an operation is performed on individual samples in a given order.

The term "predefined region" as used in the present invention, means a localised area on a support which is, was, or is intended to be used for a sample, which may be a test sample or an internal reference sample.

The term "array" as used in the present invention, means any type of pattern or arrangement.

The term "column" when referring to an array of samples is a series of samples paralleling an edge of the rectangular sheet.

The term "row" when referring to an array of samples is a series of samples paralleling the edge of the rectangular sheet that is orthogonal to the edge of the rectangular sheet which is parallel with a series of samples forming a column.

The term "combinatorial methodology" as used in the present invention, means a methodology evaluating multiple test samples arranged in a pattern allowing faster evaluation, wherein some of the test samples differ from each other by at least one component and/or property.

The term "experimental design" as used in the present invention, means a pattern for setting up experiments and making observations about the relationship between several variables in which one attempts to obtain information as efficiently as possible.

### Aaparatus

The apparatus for evaluating the triboelectrical properties of at least two samples on a support in sheet form according to the present invention comprises:
- a grounded means (1) for holding a material in sheet form comprising a support provided on at least one surface thereof with at least two samples each in at least one predefined region thereof;
- a charging means (4) for tribocharging said at least two samples; and
- a means (7) for measuring an electrical property of said at least two samples.

In a preferred embodiment of the apparatus for evaluating the triboelectrical properties according to the present invention, the apparatus also comprises a means (11) for performing a calculation on said measured electrical property.

The grounded means (1) for holding said array of multiple test samples can have any suitable form, e.g. a plate or a drum. A rotatable drum is most preferred. If a plate is used as grounded means (1), most preferably the plate moves in a linear translation with respect to the charging means (4). The grounded means is with at least a conductive layer and is preferably a metal, e.g. copper or steel.

The support (not shown) in sheet form provided on at least one surface thereof with at least two samples each in at least one predefined region thereof and is mounted onto the grounded means. In a preferred embodiment of the apparatus for evaluating the triboelectrical properties according to the present invention, charging of at least two samples of the ta least two samples is performed in parallel.

The charging means (4) for tribocharging samples can have any suitable form, e.g. transducers, metal baffles, plastic baffles, plastic rollers, metal rollers, plastic or metal shoes. Most preferably the charging means is a roller (4) consisting of or covered with a triboelectric reference material. The roller can preferably be easily removed and replaced in the apparatus. In another preferred embodiment the charging means (4) is a belt consisting of or covered with a triboelectric reference material.

A cleaning station (not shown) can be provided to remove surface contamination of the charging means (4) caused by the samples, and thereby preventing such surface contamination influencing tribocharging and hence the measurement of the electrical property. For example, a belt may be transported through a cleaning station, using isopropanol as a cleaning solution, then rinsing the belt with distilled water and drying it at 50°C, before charging a sample again. A cleaning station can be omitted by using a belt with sufficient length or a charging roller with a large enough circumference so that a fresh surface is available during all contacts and hence no restoration of the surface of the charging means (4) to its original state is required.

The means (7) for measuring an electrical property of the samples may be any measuring probe capable of measuring triboelectric charge on a surface or the surface potential. For example, the charge measuring probe (7) may be in the form of a transducer. The transducer (7) is operably associated with the rotatable drum (1) and is utilised to detect the triboelectric charge on the test sample. The signal corresponding to the triboelectric charge is measured by an electrostatic voltmeter (8) and transmitted to a computer (11).

The measuring probe (7) operates discontinuously or continuously. In a preferred embodiment of the method according to the present invention, the measuring probe (7) operates continuously and is sequentially scanned across the samples.. The resolution corresponds to the distance between the "scanning lines". This distance is determined by the rotation speed of the drum (1) and by the linear translation speed of the measuring probe (7). The resolution is preferably smaller than 5 mm, preferably about 2 mm, most preferably for a high resolution about 1 mm of distance between the scanning lines is used.

In the case that the grounded means is a plate moving, back and forth, in a linear translation with respect to the charging means (4), the measurement of the electrical property is conducted in a zigzag motion. The resolution is determined by the linear translation speed of the plate (1) and by the linear translation speed of the measuring probe (7).

The means (11) for performing a calculation on the measured electrical property of the charged multiple samples is preferably a computer, more preferably a PC. The calculations on the measured electrical property of the charged multiple samples is performed by software (12) running on the computer (11). This software (12) may be consisting of a commercially available software e.g. Excel@ (available from MICROSOFT) for performing relatively simple statistical calculations, but preferably it is a dedicated in-house written software that is also capable of controlling, for example, the rotation speed of the drum (1) and the linear translation speed of the measuring probe (7).

Fig. 1 shows a schematic representation of a preferred embodiment of an apparatus used in accordance with the present invention. The apparatus has following principal parts:
- a grounded rotatable drum (1) for holding a support in sheet form bearing the samples to be measured; it is driven by a servo-motor (2); on its axis an encoder (3) is fixed for synchronisation;
- a charging roller (4), positioned above said drum (1), consisting of or covered with a triboelectric reference material; it has an axis which is held by bearing holders (5) which can be moved up and down by compressed air-driven cylinders (6);
- a measuring probe (7) connected to an electrostatic voltmeter (8), and mounted in front of the drum on a spindle (9) driven by a second servo-motor (10);
- a computer (11) equipped with suitable software (12) and a suitable interface (13) for sending data to drive (14) the motors and the encoder, and for receiving and handling measuring data from the electrostatic voltmeter.

An example of an in-house built apparatus, according to the present invention, is an apparatus with the following components:
- A rotatable drum (1) (diameter 229 mm, width 650 mm) to which the sheet holding the array of samples can be fastened. The drum (1) is driven via its axis by means of a servomotor (2).
- At both ends of the rotatable drum a compressed air-driven cylinder (6) is mounted. At the end of each compressed air-driven cylinder (6), a bearing holder (5) is mounted for an axle of the charging roller (4). In the bearing holders (5) different charging rollers (4) can be mounted consisting of or covered with the triboelectric reference material.
   Preferably this roller comprises a surface of a dissipative material.
- An encoder (3) is mounted on the drum axis and is used for synchronisation purposes. The encoder can send 360 pulses/revolution or 1 pulse/revolution. In the set up described here, the zero-passage (1 pulse/revolution) (digital) is transmitted to a DAQ card (13) as synchronisation signal.
- A spindle (9) (pitch = 2.5 mm/revolution) is mounted in front of the rotatable drum (1) to which a brass mounting (7) for the electrostatic voltmeter (8) is fixed. The linear translation speed of the measuring probe (7) is controlled by the DAQ card (13) as function of the desired scan resolution. The spindle (9) is also driven by a servomotor (10).
- The signals of the (analogue) electrostatic voltmeter (8) TREK 368 or 370 are fed to the analogue entry of the DAQ card (13). The sample frequency is set up depending on the desired resolution.
- Input and output data controlled by a computer (11): HP Vectra XA Pentium 1, 200 MHz; operating system: Windows NT4.0; driven by in-house written software CVI/Labwindows (12). The interface between computer and device is the DAQ card (13): LABPC+ of National Instruments with 8 analogue In (12 bit), 2 Analogue Out (12 bit), 24 Digital I/O, 83 K samples/s.

### Method

The method for evaluating the triboelectrical properties of an array of samples, according to the present invention, comprises the following steps:
(a) providing on a support in sheet form an array of samples each in a predefined region;
(b) tribocharging said array of samples; and
(c) measuring sequentially an electrical property of a sample in said array of tribocharged samples.

In a preferred embodiment the method comprises a step (d) of subjecting said array of samples on said support in sheet form to a post-treatment. Preferably this post-treatment step is performed on all the samples in the experiment. This post-treatment is preferably chosen from a printing step, a drying step, a moisturising step, a cooling step, a thermal treatment, a UV-curing step, or combinations thereof.

A preferred embodiment of the method of the present invention using the apparatus described above is now explained in more detail:
- The sheet holding the samples to be examined and the reference material are preferably preconditioned.
- In the bearing holders (5) the charging roller (4) consisting of or covered with the triboelectric reference material is mounted.
- The sheet holding the samples is cut into the desired format and fastened to the rotatable drum (1) with the side to be measured upside.
- The program is started and the parameters of the experiment are entered in the computer (11). The measuring probe (7) is brought to its starting position on the spindle (9) at the left side. The speed of the drum (1) is brought gradually to 30 rpm. Subsequently the average rotation speed is determined from 5 rotations. The spindle speed and sample time are adjusted to realise the required resolution.
- The spindle (9) is started and the measuring probe (7) moves laterally from left to right over the width of the drum (1). Of each sheet carrying test samples a blank recording is made without contact with the reference material roller. By means of a pressure air-driven cylinder (6) the reference material roller (4) is lowered and brought in contact with the drum (1) and the recording is started again. The pressure is determined by the own weight of the roller (4) and the roller (4) is not driven itself.
- The electrical potential data from the electrostatic voltmeter (8) are stored by the computer (11) in an array of rows and columns corresponding with the array of rows and columns as present on said sheet.
- The data can be graphically presented after conversion to a colour code. The program converts the data going from -1000 V to +1000 V into 31 different colours. The width of potential corresponding to each colour is not linear over the complete potential domain; around 0 V the resolution is highest. The array of colours can be displayed on the monitor of the computer (11).
- In order to reach a plateau value of charge for each sample it is necessary to make and break contact with the charging roller (4) numerous times. Variability in the composition of supposedly identical test samples, variability in the charging due to roller contamination and/or variability in charging effects across the roller for a given reference material can be statistically averaged out by ensuring that each test sample being evaluated is present in each column of the array.
- At the end of the charging, the charging roller (4) can be separated from the drum without stopping the drum or the scanning of the electrometer probe and the relaxation of the charging can then be followed as a function of time.
- By choosing at least two different reference materials for the surface of the charging roller (4) which are triboelectrically distant from each other a good idea can be obtained of the electrostatic properties of each sample.

### Triboelectrical properties

Tribocharging arises when two dissimilar materials are brought into frictional contact and then separated, each material becoming electrically charged with an opposite polarity. If the material is an insulator, this charge will be localised in the immediate region of the surface involved in the contact.

The triboelectric properties that can be determined with the apparatus and methods according to this invention, include, for example, the position of a material in the triboelectric series. This can be determined by measuring the surface potential of said material after tribocharging by a reference material whose position in the triboelectric series is known.

The surface potential of a sample in a predefined region is calculated with Formula 1 as the average of the measured potentials (U )after excluding edge effects:

### Mathematical formula found. No formatter available, formula omitted! (Formula 1)

Another triboelectric property that can be quantified is the triboelectric chargeability. The phenomena of triboelectric chargeability are not fully understood. A large number of factors influence triboelectric chargeability e.g. temperature, relative humidity, the nature of the materials, contaminants, the softness of the materials... The result of a measurement is only meaningful if it is sufficiently well characterised and is reproducible. In a preferred embodiment of the apparatus according to the present invention, means are foreseen to calculate the standard deviation of the triboelectric chargeability of a sample, and in which the chargeability of internal reference samples can be used to monitor extraneous effects during the charging process e.g. by their presence in each column of the array.

The triboelectric charging factor of a material is calculated by the subtraction of the surface potential of the material tribocharged with a first reference material from the surface potential of the material tribocharged with a second reference material selected to be triboelectrically distant from the first reference material in the triboelectric series. A large value of the triboelectric charging factor means that the material can be easily charged by frictional contact with the surfaces of the two reference materials selected.

### Materials

### Combinatorial methodology

Generally, an array of samples is prepared by sequentially delivering different compositions or components of materials to predefined regions on a support, but the array of materials can also be prepared by delivering the different compositions or components of materials to predefined regions on a support in parallel or simultaneously. The samples may also be prepared in-situ on the support e.g. by a chemical reaction or physical interaction (e.g. mixing).

In one embodiment, for example, in a first step (a) of the method of the present invention, samples are applied to a support in sheet form in an array of predefined regions, whereby the nature and/or concentration of at least one component in said samples is varied according to the combinatorial methodology.

The application of the samples on the support can be performed by any suitable means, including for example a pipette, a micropipette, a printer (e.g. an ink-jet printer), a coating apparatus and equipment based on sputtering, spraying, or vapour deposition techniques. The samples can be also applied to the support by any other means e.g. by gluing, taping and lamination. The means for the application of the samples to the support can be manual or, alternatively, automated, for example, robotics techniques.

The geometry of the array of predefined regions may take any form, but preferably it is a rectangular grid comprising rows and columns. The test and internal reference samples may be arranged on the support in a logical order (e.g. an increasing concentration of the varied component), a randomised order or according to an arrangement defined by the experimental design.

The size of a predefined region is usually determined by the size of the apparatus, the number of test samples, the cost of the test samples, and is only restricted by the minimum area required for measuring accurately the electrical property on a test sample. The area of a predefined region on the support is usually smaller than about 25 cm², preferably less than 10 cm², more preferably less than 5 cm². In some embodiments, the predefined regions can even have an area less than 1 cm².

The composition or component may be varied over both rows and columns of the combinatorial array, or the composition or component may be varied only from row to row but kept constant in each row, or vice versa for the columns.

Apart from the variable component the samples may contain a set of components which are kept constant over the total array or part of the array in the experiment. The set of constant components can be applied in two fundamentally different ways. It can be dispensed or applied together with the variable component or the set of constant components can be incorporated in a separate precoat covering the whole area of the support, and the ingredients/components which are subsequently dispensed comprise only the variable component ("missing component principle").

In another approach, a hydrophobic material can be used to coat the region surrounding the test samples. Such materials localise aqueous (and certain other polar) solutions from moving to the predefined regions on the support. Of course, when non-aqueous or nonpolar solvents are employed, different surface coatings will be required.

### Support

The support in sheet form provided with samples for evaluating the triboelectrical properties as used in the present invention may be any suitable flat support, but may contain dimples or other recesses. The dimples will be preferably less than 1 mm in diameter, particularly preferably less than 100 µm in diameter, and especially preferably less than 25 µm in diameter. The depth of such dimples will preferably be less than 100 µm and particularly preferably less than 25 µm below the upper surface of the support.

The support preferably exhibits flexibility allowing the support to be mounted on the surface of a rotatable drum.

The support in sheet form for holding the array of test samples as used in the present invention may for instance be chosen from the type of supports used in the photographic industry or the printing industry. Suitable supports include paper, metallic and polymeric supports.

Suitable paper supports include plain paper, cast coated paper, polyethylene coated paper and polypropylene coated paper.

Suitable metallic supports include aluminium plates as used for manufacturing printing plates.

Suitable polymeric supports include cellulose acetate propionate or cellulose acetate butyrate, polyesters such as polyethylene terephthalate and polyethylene naphthalate, polyamides, polycarbonates, polyimides, polyolefins, poly(vinylacetals), polyethers and polysulphonamides. Other examples of useful high-quality polymeric supports for the present invention include opaque white polyesters and extrusion blends of polyethylene terephthalate and polypropylene. Polyester film supports and especially polyethylene terephthalate are preferred because of the availability of types with excellent dimensional stability.

When a polyester is used as the support material with a hydrophilic layer, a subbing layer may be employed to improve the bonding of the hydrophilic layer(s) to the support. Useful subbing layers for this purpose are well known in the photographic art and include, for example, polymers of vinylidene chloride such as vinylidene chloride /acrylonitrile /acrylic acid terpolymers or vinylidene chloride /methyl acrylate /itaconic acid terpolymers. A preferred polymer of the latter type is co(vinylidenechloride-methylacrylate-itaconic acid ; 88 wt% / 10 wt% / 2 wt%). A most suitable subbing layer contains the latter polymer and a colloidal silica such as KIESELSOL 100F (available from Bayer AG) and may optionally include a co(methylacrylate-butadiene-itaconic acid) (49 wt%/49 wt%/2 wt%), preferably at a concentration of about 10 wt%. The most favourable adhesion properties are obtained when a subbing layer as described above provided with an additional primer layer containing gelatine (preferably 0.25 - 0.35 g/m²), Kieselsol 300 F (0.30 - 0.40 g/m²) (available from Bayer AG) and a matting agent on the base of polymethylmethacrylate (average size 2 to 3 µm) at a coverage of ca. 0.001 2 g/m².

### Samples

The samples for evaluating the triboelectrical properties provided on the support in sheet form as used in the present invention, are provided on at least one surface and comprise at least two samples. In combinatorial or experimental design experiments, an array of samples is applied to the support in sheet form.

The at least two samples comprise one or more test samples and one or more internal reference samples. The reference samples are preferably distributed in predefined regions on the support in sheet form corresponding with different tribocharging positions on the charging means. Multiple samples of identical composition and properties allow statistical calculations, e.g. the calculation of the standard deviation of the triboelectric chargeability of a sample. It was also found that by using internal reference samples, an easier comparison between different sheets with samples, comprising identical internal reference samples, becomes possible and moreover the use of multiple internal reference samples enables extraneous influences in the charging process e.g. contamination of reference material of the charging means to be detected.

The samples preferably have a very low roughness, but surfaces exhibiting higher roughness can be used if they allow tribocharging of the test sample. The surface roughness expressed in terms of a is preferably smaller than a 1 mm, particularly smaller than 100 µm, and especially preferably smaller than 10 µm.

In a preferred embodiment of the present invention the component which is varied, and/or the components which are held constant are chosen from the typical ingredients of photographic materials based on silver halide emulsion technology. A silver halide emulsion is usually composed of a protective hydrophilic binder, usually gelatine, and a silver halide, chosen from silver bromide, silver chloride or mixed bromide-chloride-iodide salts.

Such photographic emulsion(s) can be prepared from soluble silver salts and soluble halides according to different methods as described e.g. by P. Glafkidès in "Chimie et Physique Photographique", Paul Montel, Paris (1967), by G.F. Duffin in "Photographic Emulsion Chemistry", The Focal Press, London (1966), and by V.L. Zelikman et al in "Making and Coating Photographic Emulsion", The Focal Press, London (1966). They can be prepared by mixing the halide and silver solutions in partially or fully controlled conditions of temperature, concentrations, sequence of addition, and rates of addition. The silver halide can be precipitated according to the single jet method, the double-jet method, the conversion method or an alternation of these different methods.

Furthermore, the silver halide can be doped with various metal salts or complexes such as Rhodium and Iridium dopants.

The emulsion can be desalted in the usual ways e.g. by dialysis, by flocculation and re-dispersing or by ultrafiltration.

The light-sensitive silver halide emulsions are preferably chemically sensitised as described e.g. in the above-mentioned "Chimie et Physique Photographique" by P. Glafkidès, in the above-mentioned "Photographic Emulsion Chemistry" by G.F. Duffin, in the above"Making and Coating Photographic Emulsion" by V.L. Zelikman et al, and in "Die Grundlagen der Photographischen Prozesse mit Silberhalogeniden" edited by H. Frieser and published by Akademische Verlagsgesellschaft (1968).

Spectral sensitisation of silver halide emulsions can realised with dyes such as those described by F.M. Hamer in "The Cyanine Dyes and Related Compounds", 1964, John Wiley & Sons. Dyes that can be used for the purpose of spectral sensitisation include cyanine dyes, merocyanine dyes, complex cyanine dyes, complex merocyanine dyes, hemicyanine dyes, styryl dyes and hemioxonol dyes. Particularly useful dyes are those belonging to the cyanine dyes, merocyanine dyes and complex merocyanine dyes.

Apart from spectrally sensitising dyes the silver halide emulsion composition or other hydrophilic compositions which are meant to be coated as auxiliary layers, e.g. a backing layer, an undercoat layer, or a protective top layer, may contain other types of dyes such as antihalation dyes, acutance dyes and correction dyes.

The silver halide emulsion(s) for use in accordance with the present invention may comprise compounds for preventing the formation of fog or stabilising the photographic characteristics during the production or storage of photographic elements or during the photographic treatment thereof. Many fog-inhibiting agents or stabilisers are known for use in silver halide emulsions. Suitable examples are disclosed in *Research Disclosure* Item 36544, September 1994, Chapter VII.

In addition to silver halide another essential component of a light-sensitive emulsion composition is the binder. The binder is a hydrophilic colloid, preferably gelatine. Gelatine can, however, be replaced in part or integrally by synthetic, semi-synthetic or natural polymers.

The binders of the photographic element, especially when the binder used is gelatine, can be hardened with appropriate hardening agents such as those of the epoxide type, those of the ethylenimine type, those of the vinylsulphone type e.g.1,3-vinylsulphonyl-2-propanol, chromium salts e.g. chromium acetate and chromium alum, aldehydes e.g. formaldehyde, glyoxal, and glutaraldehyde, N-methylol compounds e.g. dimethylolurea and methyloldimethylhydantoin, dioxan derivatives e.g. 2,3-dihydroxy-dioxan, active vinyl compounds e.g. 1,3,5-triacryloyl-hexahydro-s-triazine, active halogen compounds e.g. 2,4-dichloro-6-hydroxy-s-triazine and mucohalogenic acids e.g. mucochloric acid and mucophenoxychloric acid. These hardeners can be used alone or in combination. The binders can also be hardened with fast hardeners such as carbamoylpyridinium salts as disclosed in **US 4063952** (AGFA).

The samples of the photographic emulsion composition and/or of the compositions for auxiliary layers may further comprise various kinds of other ingredients, such as lubricants, plasticizers, matting agents, spacing agents, whitening agents, UV-absorbers, and surfactants.

In the practice of this invention surfactants are particularly preferred as variable component for combinatorial design because of their important influence on the coating properties and on the antistatic properties of coated hydrophilic layers.

They can be any of the cationic, anionic, amphoteric, and non-ionic ones as described in **JP 62280068 A** (CANON). Examples of suitable surfactants are N-alkylamino acid salts, alkylether carboxylic acid salts, acylated peptides, alkylsulphonic acid salts, alkylbenzene and alkylnaphthalene sulphonic acid salts, sulphosuccinic acid salts, α-olefin sulphonic acid salts, N-acylsulphonic acid salts, sulphonated oils, alkylsulphonic acid salts, alkylether sulphonic acid salts, alkylallylethersulphonic acid salts, alkylamidesulphonic acid salts, alkylphosphoric acid salts, alkyletherphosphoric acid salts, alkylallyletherphosphoric acid salts, alkyl and alkylallylpolyoxyethylene ethers, alkylallylformaldehyde condensed acid salts, alkylallylethersulphonic acid salts, alkylamidesulphonic acid salts, alkylphosphoric acid salts, alkyletherphosphoric acid salts, alkylallyletherphosphoric acid salts, alkyl and alkylallylpolyoxyethylene ethers, alkylallylformaldehyde condensed polyoxyethylene ethers, blocked polymers having polyoxypropylene, polyoxyethylene polyoxypropylalkylethers, polyoxyethyleneether of glycolesters, polyoxyethyleneether of sorbitanesters, polyoxyethyleneether of sorbitolesters, polyethyleneglycol aliphatic acid esters, glycerol esters, sorbitane esters, propyleneglycol esters, sugaresters, fluoro C₂-C₁₀ alkylcarboxylic acids, disodium N-perfluorooctanesulphonyl glutamate, sodium 3-(fluoro-C₆ -C₁₁ -alkyl-oxy)-1-C₃-C₄ alkyl sulphonates, sodium 3-(ω-fluoro-C₆-C₈-alkanoyl-N-ethylamino)-1-propane sulphonates, N[3-(perfluorooctanesulphonamide)-propyl]-N,N-dimethyl-N-carboxymethylene ammonium betaine, fluoro-C₁₁-C₂₀ alkylcarboxylic acids, perfluoro-C₇-C₁₃-alkyl-carboxylic acids, perfluorooctane sulphonic acid diethanolamide, Li, K and Na perfluoro-C₄-C₁₂-alkyl sulphonates, N-propyl-N-(2-hydroxyethyl)perfluorooctane sulphonamide, perfluoro-C₆-C₁₀-alkylsulphonamide-propyl-sulphonyl-glycinates, bis-(N-perfluorooctylsulphonyl-N-ethanolaminoethyl)phosphonate, mono-perfluoro C₆ -C₁₆ alkyl-ethyl phosphonates, and perfluoroalkylbetaine.

Useful cationic surfactants include N-alkyl dimethyl ammonium chloride, palmityl trimethyl ammonium chloride, dodecyldimethylamine, tetradecyldimethylamine, ethoxylated alkyl guanidine-amine complex, oleamine hydroxypropyl bistrimonium chloride, oleyl imidazoline, stearyl imidazoline, cocamine acetate, palmitamine, dihydroxyethylcocamine, cocotrimonium chloride, alkyl polyglycolether ammonium sulphate, ethoxylated oleamine, lauryl pyridinium chloride, N-oleyl-1,3-diaminopropane, stearamidopropyl dimethylamine lactate, coconut fatty amide, oleyl hydroxyethyl imidazoline, isostearyl ethylimidonium ethosulphate, lauramidopropyl PEG-dimoniumchloride phosphate, palmityl trimethylammonium chloride, and cetyltrimethylammonium bromide.

Especially useful are the fluorocarbon surfactants as described in e.g. US **4781985** (JAMES RIVER GRAPHICS ) having a structure of: F(CF₂)₄CH₂CH₂SCH₂CH₂ N⁺R₃X⁻ wherein R is a hydrogen or an alkyl group; and in **US 5084340** (KODAK) , having a structure of: CF₃(CF₂)ₘ CH₂ CH₂O(CH₂ CH₂O)ₙ R wherein m = 2 to 10; n = 1 to 18; R is hydrogen or an alkyl group of 1 to 10 carbon atoms. These surfactants are commercially available from Du Pont and 3M.

### Industrial applicability

The apparatus and methods of the present invention can be used, for example, in the manufacturing and the application of photographic materials, printing plates, thermal printing systems, transparent overhead projection foils, glass materials and textiles.

The present invention will now be illustrated by the following example without however being limited thereto.

### EXAMPLE

The following surfactants were tested for their influence on the triboelectric properties of a typical hydrophilic gelatinous layer:
- Surfactant 1 (SF-1) : C₇ H₁₅ -COONH₄⁺
- Surfactant 2 (SF-2) : C₈ H₁₇-phenyl-(O-CH₂-CH₂)₈-O-CH₂-COOH

In the experiment the concentration of the gelatine K16096 (available from DGF STOESS AG) is also varied. Three different stock solutions were prepared having following compositions :
(A) 3.5 g of 1 % gelatine + 300 ml water + 0.5 g of a dye
(B) 3.5 g of 2% gelatine + 150 ml water + 0.5 g of a dye
(C) 3.5 g of 1.5% gelatine + 225 ml water + 0.5 g of a dye

The "dye" used was a 2.5% solution of
4-[3-[3-carboxy-5-hydroxy-1-(2,2,2-trifluoroethyl)-1H-pyrazol-4-yl]-2-propenylidene]-4,5-c 1 H-Pyrazole-3-carboxylic acid. This solution was prepared by dissolving 25 g of
4-[3-[3-carboxy-5-hydroxy-1-(2,2,2-trifluoroethyl)-1H-pyrazol-4-yl]-2-propenylidene]-4,5-c 1 H-Pyrazole-3-carboxylic acid in powder form in 500 ml of pure methanol, 375 ml water and 125 ml of sodium hydroxide solution (16 g of NaOH in 994 ml of water).

To the stock solutions the surfactants SF-1 and SF-2 were added or not added resulting in eight compositions as illustrated in the Table 1. The surfactants were added as a 5% solution in water. Water was added to the stocksolutions of the eight compositions as illustrated in the Table 1 in order to obtain fully comparative compositions.

**[0095] Table 1**

| **Comp. No.** | **Stock sol.** | **SF-1** (µl) | **SF-2** (µl) | **Water (µl)** |
|---|---|---|---|---|
| 1 | A | 0 | 0 | 667 |
| 2 | A | 133 | 0 | 533 |
| 3 | A | 0 | 200 | 467 |
| 4 | B | 0 | 0 | 333 |
| 5 | B | 133 | 0 | 200 |
| 6 | B | 0 | 200 | 133 |
| 7 | C | 133 | 0 | 366 |
| 8 | C | 0 | 200 | 300 |

The compositions were dispensed at 40°C on a polyethylene terephthalate sheet of appropriate dimensions in an array of 8 rows and 10 columns and dried for 1 h at 40°C. The composition of the samples of each row corresponded to the compositions given in Table 1. The compositions were held constant over the width of each row. Two experiments of triboelectric charging and measuring were performed with the in-house built apparatus as extensively described in a previous section. In the first experiment the charging roller consisted of rubber. In the second experiment the surface of the roller was covered with a sleeve of nylon. The measured surface potentials in volts, measured along column 7 when the charging plateau is reached, are summarised in Table 2.

**Table 2**

| **Sample No.** | **Additive** | **Surface Potential** for Nylon (volt) | **Surface Potential for Rubber** (volt) | **Triboelectrical** charging factor (Rubber-Nylon) (volt) |
|---|---|---|---|---|
| 1 | None | -25 | 267 | 292 |
| 2 | SF-1 | -119 | -60 | 59 |
| 3 | SF-2 | 19 | 339 | 320 |
| 4 | None | -10 | 174 | 184 |
| 5 | SF-1 | -134 | -94 | 40 |
| 6 | SF-2 | 21 | 335 | 314 |
| 7 | SF-1 | -105 | -100 | 5 |
| 8 | SF-2 | 19 | 338 | 319 |

The combination with either surfactant can be good or bad depending on the potential problem. The use of surfactant SF-2 is to be preferred when there are specific electrostatic problem vis-à-vis nylon sleeves mounted over rollers as currently used in the coating alleys of the photographic industry. On the other hand if a problem would occur of triboelectric charging against a rubber suction roller the surfactant SF-1 would be the better choice. When looking for a surfactant which is better in a situation wherein both rubber and nylon surfaces are present, it is clear that SF-1 is in that case the best choice in view of a lower triboelectrical charging factor.

Having described in detail preferred embodiments of the current invention, it will now be apparent to those skilled in the art that numerous modifications can be made therein without departing from the scope of the invention as defined in the appending claims.

## Claims

1. An apparatus for evaluating the triboelectrical properties of at least two samples, comprising:
- a grounded means (1) for holding a material in sheet form comprising a support provided on at least one surface thereof with at least two samples each in at least one predefined region thereof;
- a charging means (4) for tribocharging said at least two samples; and
- a means (7) for measuring an electrical property of said at least two samples.

2. An apparatus according to claim 1, wherein said at least two samples comprise at least one test sample and at least one internal reference sample.

3. An apparatus according to claim 1 or 2, wherein said grounded means for holding said support provided on at least one surface thereof with said at least two samples is a rotatable drum (1).

4. An apparatus according to claims 1 to 3, comprising a means (11) for performing a calculation on said measured electrical property.

5. An apparatus according to claim 4, wherein said means for performing a calculation on said measured electrical property is a computer (11).

6. An apparatus according to claims 1 to 5, wherein said apparatus comprises:
- a grounded rotatable drum (1) for holding the support in sheet form;
- a charging roller (4), consisting of or covered with a triboelectric reference material;
- a measuring probe (7) connected to a voltmeter (8) for measuring electrostatic potentials;
- a computer (11) for handling outgoing and incoming data.

7. An apparatus according to claim 5 or 6, wherein a software (12) of a computer (11) controls the rotation speed of said rotatable drum (1) and the linear translation speed of said measuring means (7) for measuring said electrical property across said support in sheet form.

8. An apparatus according to any of claims 1 to 7, comprising a means for a post-treatment on said at least two samples.

9. An apparatus according to claim 8, wherein said means for a post-treatment is chosen from a printing means, a drying means, a moisturising means, a thermal treatment means, a UV-curing means, or combinations thereof.

10. A method for evaluating the triboelectrical properties of an array of samples, said method comprising the following steps:
(a) providing on a support in sheet form an array of samples each in a predefined region;
(b) tribocharging said array of samples; and
(c) measuring sequentially an electrical property of a sample in said array of tribocharged samples.

11. A method according to claim 10, said method comprising a step (d) of subjecting said samples on said support in sheet form to a post-treatment step chosen from a printing step, a drying step, a moisturising step, a cooling step, a thermal treatment, a UV-curing step, or combinations thereof.

12. A method according to claims 10 or 11, wherein statistical calculations are performed on the measured electrical property of said tribocharged samples in said array, wherein each different test sample of said tribocharged samples is present in at least two different columns and rows.
